(19) Europäisches Patentamt
European Patent Office
Office européen des brevets

(11) Veröffentlichungsnummer: **0 544 226 A1**

## (12) EUROPÄISCHE PATENTANMELDUNG

(21) Anmeldenummer: **92119982.4**

(22) Anmeldetag: **24.11.92**

(51) Int. Cl.5: **C02F 3/12**, C02F 1/52, B01D 21/26

(30) Priorität: **25.11.91 DE 4138667**

(43) Veröffentlichungstag der Anmeldung: **02.06.93 Patentblatt 93/22**

(84) Benannte Vertragsstaaten: **AT BE CH DE ES FR IT LI NL**

(71) Anmelder: **SÜD-CHEMIE AG Lenbachplatz 6 W-8000 München 2(DE)**

(72) Erfinder: **Huber, Anton, Dipl.-Ing. Plantagenweg 376 W-8050 Freising(DE)**

(74) Vertreter: **Reitzner, Bruno, Dr. et al Patentanwälte Dipl.-Ing. R. Splanemann Dr. B. Reitzner, Dipl.-Ing. K. Baronetzky Tal 13 W-8000 München 2 (DE)**

(54) **Verfahren zum entlasten von Nachklärbecken.**

(57) Es wird ein Verfahren zum Entlasten von Nachklärbecken durch Abtrennung eines Teils des Rücklaufschlamms aus dem Belebungsbecken (Belebtschlamm) beschrieben. Dieses Verfahren ist dadurch gekennzeichnet, daß man den Belebtschlamm durch einen Hydrozyklon leitet, den Überstand des Hydrozyklons (Feinlaufphase), dessen Belebtschlamm-Belastung etwa das 0,1- bis 0,5-fache der ursprünglichen Belastung beträgt, in ein Nachklärbecken (gegebenenfalls mit Denitrifikation) leitet, und den Ablauf des Hydrozyklons (Schlammphase), dessen Belebtschlamm-Belastung etwa das 2- bis 10-fache der ursprünglichen Belastung beträgt, in einen ersten und einen zweiten Teilstrom unterteilt, wobei der erste Teilstrom in das Belebungsbecken zurückgeleitet und der zweite Teilstrom als Überschußschlamm entfernt wird.

EP 0 544 226 A1

Die Erfindung betrifft ein Verfahren zum Entlasten von Nachklärbecken durch Abtrennung eines Teils des Rücklaufschlamms aus dem Belebungsbecken (Belebtschlamm).

Bei der Abwasserreinigung werden die Abwässer in einer ersten Stufe in einem Vorklärbecken behandelt. Hierdurch werden der chemische Sauerstoffbedarf (CSB, ausgedrückt in mg $O_2$/l) und der biologische Sauerstoffbedarf ($BSB_5$, ausgedrückt im mg $O_2$/l nach 5 Tagen) um etwa 20 % herabgesetzt. Es fällt ein Klärschlamm an, der gegebenenfalls nach dem Ausfaulen in Faultürmen (Erzeugung von Biogas) landwirtschaftlich genutzt werden kann, wenn er keine zu hohen Schadstoffbelastungen (Schwermetalle, Phenole, Chlorkohlenwasserstoffe) aufweist. Ansonsten muß er deponiert oder verbrannt werden.

In der zweiten Stufe werden die vorgereinigten Abwässer in ein Belebungsbecken geleitet, und zwar zusammen mit belebtem Rücklaufschlamm aus einem Nachklärbecken sowie zusammen mit nitrathaltigem Rücklaufwasser aus dem Ablauf des Belebungsbeckens. Im ersten, anoxischen Bereich des Belebungsbeckens wird zunächst der Nitratgehalt des Rücklaufwassers durch Denitrifikation in molekularen Stickstoff und Distickstoffoxid ($N_2O$) umgewandelt. Unter "anoxisch" versteht man, daß die Abwässer keinen Sauerstoff, aber noch Nitrat und Nitrit enthalten. Die Mikroorganismen, die für die Denitrifikation verantwortlich sind (Denitrifikanten) decken ihren Nährstoffbedarf durch das zulaufende Abwasser und den Rücklaufschlamm. Nach der Denitrifikation gelangt das Abwasser zunächst in den aeroben Bereich des Belebungsbeckens, in welchem der Ammoniumstickstoff unter Luftzufuhr durch nitrifizierende Mikroorganismen (Nitrifikanten) in Nitratstickstoff umgewandelt wird. Durch die Tätigkeit der Nitrifikanten wird zusätzlich neuer Belebtschlamm gebildet. Parallel dazu erfolgt der mikrobielle Abbau der organischen Fracht unter Bildung von $CO_2$ und $H_2O$. Der größte Teil des nitrathaltigen Abwassers (etwa 300 bis 400 % des Zulaufs) wird als Rücklaufwasser in den ersten anoxischen Bereich des Belebungsbeckens zurückgeleitet. Die Restmenge des nitrathaltigen Abwassers ($NH_4^+$-Stickstoff < 10 mg/l; Gesamtstickstoffgehalt < 18 mg/l) wird in der dritten Stufe zusammen mit dem Belebtschlamm in ein Nachklärbecken geleitet, in welchem der Belebtschlamm abgeschieden wird. Das geklärte Abwasser wird in den Vorfluter geleitet. Der abgeschiedene Belebtschlamm wird teilweise als Rücklaufschlamm in den ersten anoxischen Bereich des Belebungsbeckens zurückgeleitet, zum Teil als Überschußschlamm abgeleitet und, gegebenenfalls nach dem Ausfaulen in Faultürmen, für landwirtschaftliche Zwecke genutzt bzw. deponiert oder verbrannt.

Die Abscheidung des Belebtschlamms im Nachklärbecken erfolgt normalerweise durch Sedimentation. Wenn das Nachklärbecken hydraulisch überlastet oder zu flach ist bzw. ein zu kleines Volumen hat, ist die Abscheidung des Belebtschlamms unbefriedigend, d.h. ein unzulässig hoher Teil des Belebtschlamms kann in den Vorfluter gelangen.

Die DE-C-3 025 521 betrifft ein Verfahren zur Regelung des Flockungsmittelzusatzes bei der Trennung von Feststoff-Flüssigkeitsgemischen mittels Zentrifugen, bei dem der Sollwert für den Flockungsmittelbedarf aus einem Meßwert für den Feststoffgehalt des Zentrates gebildet und mit dem gemessenen Flockungsmittelfluß verglichen wird und bei dem bei einer Regelabweichung zwischen dem Sollwert für den Flockungsmittelbedarf und den Meßwert für den Flockungsmittelzufluß letzterer verändert wird. Außerdem wird noch ein Meßwert für den Feststoffgehalt des zugeführten Gemisches bestimmt. Diese Druckschrift enthält keine Hinweise auf die Möglichkeit der Entlastung von Nachklärbecken durch Abtrennung eines Teils des Rücklaufschlammes und Rückführung eines Teils der Schlammphase in das Belebungsbecken.

Aus der DE-B-1 278 363 ist ein Verfahren zur Abscheidung von in Walzwerksabwasser enthaltenem Sinter, Öl und Trübstoff durch Flockungsmittel in einem Hydrozyklon bekannt, wobei das Flockungsmittel vor dem Hydrozyklon dem Abwasser zugesetzt und das Koagulat zusammen mit dem Sinter im Unterlauf des Hydrozyklons abgeführt wird. Auch diese Druckschrift befaßt sich nicht mit dem Problem der Entlastung von Nachklärbecken.

In der Literaturstelle "Korrespondenz Abwasser" 34, 1987, S. 77-85, insbesondere Ziffer 2.4.1.1.3 ist ein Belebungsverfahren mit simultaner Denitrifikation beschrieben, wobei allgemein darauf hingewiesen wird, daß keine ausgeprägte Trennung zwischen Nitrifikations- und Denitrifikationszone besteht. Über die Trennung des Belebtschlammes von der flüssigen Phase sowie über die Rückführung der Schlammphase finden sich keine Hinweise.

Aus "Chemical Abstracts", Vol. 110, 1989, S.347, Ref. Nr. 44385y ist eine Vorrichtung zur Fließbettbehandlung von stickstoffhaltigem organischem Abwasser bekannt. Diese Vorrichtung enthält einen Fließbett-Biofilmreaktor mit einer oberen aeroben Zone und einer unteren anaeroben Zone, eine Luftverteilerplatte in der aeroben Zone, einen Hydrozyklon zur Abtrennung und Rückleitung des Rücklauf-Belebtschlamms der aeroben Zone in die anaerobe Zone und Einrichtungen zum Rückleiten eines Teils der Flüssigkeit vom Hydrozyklon in die anaerobe Zone. Es ist kein Nachklärbecken vorgesehen.

Der Erfindung liegt die Aufgabe zugrunde, ein Verfahren zum Entlasten von Nachklärbecken bereitzustellen, wonach ein grosser Teil des Rücklaufschlamms aus dem Belebungsbecken (Belebtschlamm) auf einfache Weise wirksam abgetrennt werden kann, so daß der restliche Teil mit Sicherheit im Nachklärbek-

ken zurückgehalten wird.

Das erfindungsgemäße Verfahren ist dadurch gekennzeichnet, daß man den Belebtschlamm durch einen Hydrozyklon leitet, den Überstand des Hydrozyklons (Feinlaufphase), dessen BelebtschlammBelastung etwa das 0,1- bis 0,5-fache der ursprünglichen Belastung beträgt, in ein Nachklärbecken (gegebenenfalls mit Denitrifikation) leitet, und den Ablauf des Hydrozyklons (Schlammphase), dessen Belebtschlamm-Belastung etwa das 2- bis 10- fache der ursprünglichen Belastung beträgt, in einen ersten und einen zweiten Teilstrom unterteilt, wobei der erste Teilstrom in das Belebungsbecken zurückgeleitet und der zweite Teilstrom als Überschußschlamm entfernt wird.

Das erfindungsgemäße Verfahren ermöglicht nicht nur eine Entlastung von bestehenden Nachklärbecken, sondern auch eine Verkleinerung der Nachklärbecken beim Bau neuer Abwasserreinigungsanlagen. Weiterhin wird die Möglichkeit der Nitrifizierung in vorhandenen oder kleineren Belebtschlammbecken verbessert, da durch eine Erhöhung der Belebtschlammkonzentration im Belebungsbecken das Schlammalter des Belebtschlamms und damit die Konzentration an nitrifizierenden Mikroorganismen (Nitrifikanten) erhöht wird. Ohne die Verwendung eines Hydrozyklons könnte man mit der Belebtschlammkonzentration nur bis zu einer gewissen Obergrenze gehen, um zu vermeiden, daß zuviel Belebtschlamm in das Nachklärbecken gelangt.

Hydrozyklone sind konische Geräte, in denen Suspensionen ohne rotierende Apparateteile durch tangentiales Einströmen in Rotation versetzt werden. Man hat Hydrozyklone bisher zum Trennen, Eindicken und Entwässern flüssiger Suspensionen und Schlämme verwendet, nicht aber zur Abscheidung von z.T. kolloidal dispergierten Schwebstoffen in Abwässerschlämmen. Der Grund hierfür war wahrscheinlich folgender: in einem Hydrozyklon induziert die tangential einströmende Flüssigkeit eine starke Wirbelströmung, die ein Absitzen der kolloidal dispergierten Schwebstoffe verzögert. Überraschenderweise wurde jedoch gefunden, daß sich derartige Schwebstoffe bei den üblichen Betriebsbedingungen der Hydrozyklone leicht abscheiden lassen.

Ein Hydrozyklon ist ein sehr kompaktes Gerät, das wenig Platz beansprucht, aber andererseits in der Lage ist, in einer bestimmten Zeit große Flüssigkeitsmengen zu verarbeiten.

Mit Hilfe eines Hydrozyklons ist also eine dezentrale Abscheidung von Belebtschlamm möglich, d.h. auch kleine Betriebe können auf ihrem Gelände einen Hydrozyklon installieren und kleinere Belebungsbecken verwenden.

Vorzugsweise wird im Belebungsbecken eine Schlammbelastung

$$B_{TS} = \frac{BSB_5 \times Q_{TW}}{V_{BB} \times TS_{BB}} = 0,02 \text{ bis } 0,1 \text{ d}^{-1}$$

aufrechterhalten, wobei $BSB_5$ den biologischen Sauerstoffbedarf (mg $O_2$/l), $Q_{TW}$ die Abwassermenge ($m^3$/d), $V_{BB}$ das Volumen des Belebungsbeckens ($m^3$) und $TS_{BB}$ den Feststoffgehalt im Belebungsbecken (mg/l) bedeuten.

Diese Schlammbelastung ist gewöhnlich höher als bei üblichen Belebungsbecken, wodurch auch das durchschnittliche Schlammalter und damit auch die Konzentration der Nitrifikanten höher ist.

Durch die Verwendung eines Hydrozyklons werden ferner die mit der Bildung von Bläh- und Schwimmschlamm verbundenen Probleme ausgeschaltet und es kann eine Flockungsfiltration integriert werden.

Vorzugsweise stellt man das Volumenverhältnis zwischen dem ersten und dem zweiten Teilstrom auf 1 bis 5 : 1, vorzugsweise auf 1,5 bis 2,5 : 1, ein.

Nach einer besonders bevorzugten Ausführungsform stellt man das Volumenverhältnis zwischen dem ersten und dem zweiten Teilstrom so ein, daß die Belebtschlammbelastung des Belebungsbeckens im wesentlichen konstant bleibt.

Nach einer weiteren bevorzugten Ausführungsform versetzt man den Belebtschlamm vor dem Eintritt in den Hydrozyklon mit einer Lösung von Salzen mehrwertiger Metalle. Auf diese Weise erzielt man eine Flockung des Belebtschlamms und damit eine bessere Abscheidung im Hydrozyklon.

Vorzugsweise verwendet man eine Lösung von Al-, Fe(II)- oder -(III)-, Ca- und/oder Mg-Salzen, insbesondere von Chloriden, die gegebenenfalls auch kolloidale Kieselsäure enthält.

EP 0 544 226 A1

Das Volumenverhältnis zwischen dem ersten Teilstrom und der Lösung der Salze der mehrwertigen Metalle (bezogen auf eine 15 Gew.-%ige Lösung) auf 300 bis 10.000 : 1, vorzugsweise auf 1000 bis 5000 : 1, einstellt.

Eine weitere Entlastung des Nachklärbeckens kann dadurch erreicht werden, daß man einen Teil der Schlammphase abzweigt, mit Hilfe eines organischen Flockungsmittels ausflockt und die Flocke, vorzugsweise durch Sedimentation, Filtration oder Flotation, von der wäßrigen Phase abtrennt.

Die wäßrige Phase kann ohne weitere Reinigung in den Vorfluter geleitet werden. Die Flocken bilden einen dichten Schlamm, der unmittelbar in einen Faulturm geleitet werden kann. Der ausgefaulte Schlamm kann in üblicher Weise entwässert und anschließend verbrannt oder deponiert werden bzw. er kann landwirtschaftlich genutzt werden, wenn er keine Schadstoffe enthält.

Als Flockungsmittel verwendet man vorzugsweise ein kationisches oder anionisches Kohlenhydrat oder einen kationischen oder anionischen synthetischen Polyelektrolyten auf der Basis von Polyacrylamid, Polyacrylat, Polyethylenimmin und/oder Polyethylenoxid oder Copolymeren aus Acrylamid und Natriumacrylat.

Das Gewichtsverhältnis zwischen Schlammphase und Flockungsmittel (jeweils auf Trockengewicht bezogen) stellt man auf etwa 50 bis 5000 : 1, vorzugsweise 300 bis 1500 : 1 ein.

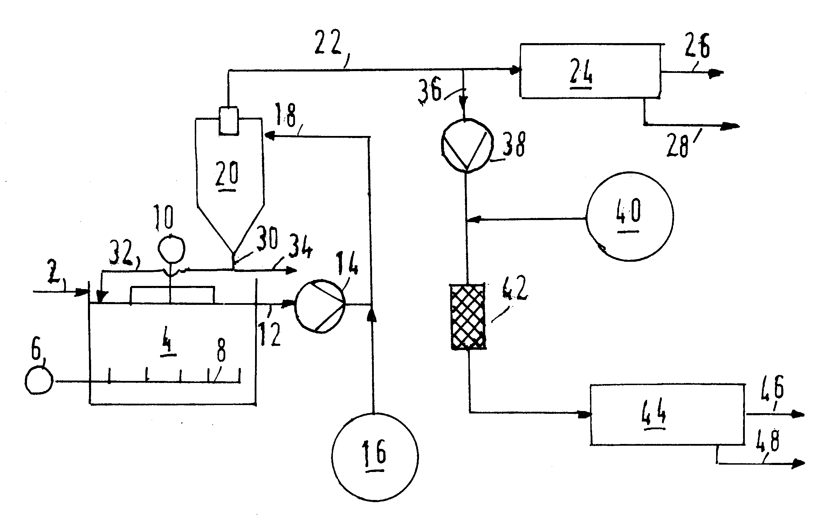

Das erfindungsgemäße Verfahren ist anhand der Zeichnung erläutert.

Durch die Leitung 2 wird das Abwasser aus dem Vorklärbecken in das Belebungsbecken 4 geleitet. In dieses wird mit Hilfe eines Kompressors 6 durch die Leitungen 8 Luft eingeleitet. Das Belebungsbecken kann in einen anaeroben Bereich, einen anoxischen Bereich und einen aeroben Bereich unterteilt sein, wie es beispielsweise in der deutschen Patentanmeldung P 41 00 685.2 angegeben ist. Der Inhalt des Belebungsbeckens kann mit Hilfe eines Rührmotors 10 gerührt werden. Aus dem Belebungsbecken 4 gelangt ein Gemisch aus Abwasser und Belebtschlamm über die Leitung 12 zu der Pumpe 14, nach welcher aus dem Behälter 16 eine Lösung von Salzen mehrwertiger Metalle zudosiert wird. Das Gemisch wird mit Hilfe der Pumpe 14 unter Druck (im speziellen Fall 2 bar) durch die Zuleitung 18 tangential in den Hydrozyklon 20 eingeführt. Im Hydrozyklon wird das Gemisch getrennt, und der Überstand des Hydrozyklons (Feinlaufphase) mit einem verminderten Belebtschlammgehalt wird über die Leitung 22 zum Nachklärbecken 24 geführt. Im Nachklärbecken findet eine Trennung durch Sedimentation statt, wobei das geklärte Abwasser durch die Leitung 26 in den Vorfluter und der abgesetzte Schlamm durch die Leitung 28 zu einem Faulturm geleitet wird. Im Nachklärbecken 24 kann auch eine Denitrifikation stattfinden. Die Trennung durch Sedimentation ist infolge der Vorbehandlung durch den Hydrozyklon ausreichend, d.h. es kann kein Belebtschlamm mehr durch die Leitung 26 in den Vorfluter gelangen.

Die Schlammphase aus dem Ablauf 30 des Hydrozyklons 20 wird in einen ersten Teilstrom, der durch die Leitung 32 in das Belebungsbecken 4 zurückgeführt wird, und in einem zweiten Teilstrom aufgeteilt, der durch die Leitung 34 als Überschußschlamm entfernt wird. Dieser Überschußschlamm kann in einem Faulturm unter Erzeugung von Biogas ausgefault werden. Der erhaltene Schlamm kann gegebenenfalls nach dem Trocknen verbrannt oder deponiert bzw. landwirtschaftlich genutzt werden.

Soll ein Teil der Feinlaufphase nicht in das Nachklärbecken geführt werden, so wird es durch die Abzweigleitung 36 zu der Pumpe 38 geführt und nach der Pumpe mit einer Lösung eines organischen Flockungsmittels aus dem Zugabebehälter 40 vermischt. Der Mischvorgang kann mit Hilfe des Statikmischers intensiviert werden. Das Gemisch tritt dann in eine Sedimentations-Flotations- oder Filtrationsvorrichtung 44 ein, wobei eine Auftrennung in eine flüssige Phase und eine Schlammphase erfolgt. Die flüssige Phase wird durch die Leitung 46 in den Vorfluter geleitet. Die Schlammphase wird in einen Faulturm geleitet, und der ausgefaulte Schlamm kann, wie vorstehend angegeben, weiter verarbeitet werden.

Nach einer alternativen Ausführungsform kann die gesamte Feinlaufphase aus der Leitung 22 der Behandlung mit dem organischen Flockungsmittel aus dem Behälter 40 unterzogen werden, insbesondere wenn die organische Fracht so hoch ist, daß sie durch das Nachklärbecken 24 nicht mehr verarbeitet werden kann. In diesem Fall wird dann die Vorrichtung 44 als Nachklärbecken eingesetzt.

Es ist ferner möglich, an Stelle der Vorrichtung 44 einen weiteren Hydrozyklon einzuschalten, wenn man nach dem Statikmischer 42 eine Flocke erhält, die sich nur schwierig von der wäßrigen Phase trennt. Der Einsatz eines Hydrozyklons an dieser Stelle ist apparativ ohne weiteres zu bewerkstelligen.

Die in der Zeichnung dargestellte Anlage wurde in einem nicht einschränkenden Ausführungsbeispiel wie folgt gefahren:

- Abwassermenge in Leitung 2:
- pH-Wert des Abwassers: 7,4
- $B_{TS}$ = 0,08
- $BSB_5$ = 370 mg$_3$O$_2$/l
- $Q_{TW}$ = 3800 m$_3$/d

- $V_{BB}$ = 4185 m
- $TS_{BB}$ = 4,2 g/l
- Verhältnis Belebtschlammbelastung in Leitung 22/ Belebtschlammbelastung in Belebungsbecken 4 = 1 : 3
- Verhältnis Belebtschlammbelastung in Leitung 30/ Belebtschlammbelastung in Behälter 4 = 20 : 1
- Druck am Eingang des Hydrozyklons 20 = 2 bar
- Anteil der Flockungsmittellösung aus 16 = 1 Gew.-%
- CSB in Leitung 26 = 46 mg $O_2$/l
- Anteil des organischen Flockungsmittels aus Behälter 40 = 2 Gew.-%
- CSB in Leitung 46 = 34 mg $O_2$/l

**Patentansprüche**

1. Verfahren zum Entlasten von Nachklärbecken durch Abtrennung eines Teils des Rücklaufsschlammes aus dem Belebungsbecken (Belebtschlamm), dadurch gekennzeichnet, daß man den Belebtschlamm durch einen Hydrozyklon leitet, den Überstand des Hydrozyklons (Feinlaufphase), dessen Belebtschlamm-Belastung etwa das 0,1- bis 0,5-fache der ursprünglichen Belastung beträgt, in ein Nachklärbecken (gegebenenfalls mit Denitrifikation) leitet, und den Ablauf des Hydrozyklons (Schlammphase), dessen Belebtschlamm-Belastung etwa das 2- bis 10-fache der ursprünglichen Belastung beträgt, in einen ersten und einen zweiten Teilstrom unterteilt, wobei der erste Teilstrom in das Belebungsbecken zurückgeleitet und der zweite Teilstrom als Überschußschlamm entfernt wird.

2. Verfahren nach Anspruch 1, dadurch gekennzeichnet, daß man im Belebungsbecken eine Schlammbelastung

$$B_{TS} = \frac{BSB_5 \times Q_{TW}}{V_{BB} \times TS_{BB}} = 0,02 \text{ bis } 0,1 \text{ d}^{-1}$$

aufrechterhält, wobei $BSB_5$ den biologischen Sauerstoffbedarf (mg $O_2$/l), $Q_{TW}$ die Abwassermenge (m³/d), $V_{BB}$ das Volumen des Belebungsbeckens (m³) und $TS_{BB}$ den Feststoffgehalt im Belebungsbecken (mg/l) bedeuten.

3. Verfahren nach Anspruch 1 oder 2, dadurch gekennzeichnet, daß man das Volumenverhältnis zwischen dem ersten und dem zweiten Teilstrom auf 1 bis 5 : 1, vorzugsweise auf 1,5 bis 2,5 :1, einstellt.

4. Verfahren nach einem der Ansprüche 1 bis 3, dadurch gekennzeichnet, daß man das Volumenverhältnis zwischen dem ersten und dem zweiten Teilstrom so einstellt, daß die Belebtschlammbelastung des Belebungsbeckens im wesentlichen konstant bleibt.

5. Verfahren nach einem der Ansprüche 1 bis 4, dadurch gekennzeichnet, daß man den Belebtschlamm vor dem Eintritt in den Hydrozyklon mit einer Lösung von Salzen mehrwertiger Metalle versetzt.

6. Verfahren nach einem der Ansprüche 1 bis 5, dadurch gekennzeichnet, daß man eine Lösung von Al-, Fe(II)- oder -(III)-, Ca- und/oder Mg-Salzen, insbesondere von Chloriden verwendet, die gegebenenfalls auch kolloidale Kieselsäure enthält.

7. Verfahren nach einem der Ansprüche 1 bis 6, dadurch gekennzeichnet, daß man das Volumenverhältnis zwischen der Schlammphase und der Lösung der Salze der mehrwertigen Metalle (bezogen auf eine 15 Gew.-%ige Lösung) auf 300 bis 10.000 : 1, vorzugsweise auf 1000 bis 5000 : 1, einstellt.

8. Verfahren nach einem der Ansprüche 1 bis 7, dadurch gekennzeichnet, daß man einen Teil der Schlammphase abzweigt, mit Hilfe eines organischen Flockungsmittels ausflockt und die Flocke, vorzugsweise durch Sedimentation, Filtration oder Flotation, von der wäßrigen Phase abtrennt.

**9.** Verfahren nach Anspruch 8, dadurch gekennzeichnet, daß man als organisches Flockungsmittel ein kationisches Kohlenhydrat oder einen kationischen synthetischen Polyelektrolyten auf der Basis von Polyacrylamid, Polyacrylat, Polyethylenimin und/oder Polyethylenoxid verwendet.

**10.** Verfahren nach Anspruch 8 oder 9, dadurch gekennzeichnet, daß man das Gewichtsverhältnis zwischen Schlammphase und organischem Flockungsmittel (jeweils auf Trockengewicht bezogen) auf etwa 50 bis 5000 : 1, vorzugsweise 300 bis 1500 : 1 einstellt.

EP 0 544 226 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 415 452 (RICHARD W. HEIL ET AL.)<br>* Spalte 1, Zeile 7 - Zeile 49 *<br>* Spalte 4, Zeile 40 - Spalte 7, Zeile 8 *<br>--- | 1,2,4 | C02F3/12<br>C02F1/52<br>B01D21/26 |
| A | US-A-3 673 083 (NALCO CHEMICAL COMPANY)<br><br>* Spalte 6; Anspruch 1; Abbildung *<br>--- | 1,5,6,8,9 | |
| A | DE-B-1 172 614 (METALLGESELLSCHAFT AG)<br>* Spalte 7; Ansprüche 1,2 *<br>* Spalte 3, Zeile 8 - Zeile 21 *<br>* Spalte 4, Zeile 22 - Zeile 32 *<br>* Spalte 5, Zeile 6 - Zeile 22 *<br>* Beispiele *<br><br>----- | 1,5-7 | |
| | | | **RECHERCHIERTE SACHGEBIETE (Int. Cl.5)**<br><br>C02F<br>B01D |

Der vorliegende Recherchenbericht wurde für alle Patentansprüche erstellt

| Recherchenort | Abschlußdatum der Recherche | Prüfer |
|---|---|---|
| DEN HAAG | 02 MAERZ 1993 | TEPLY J. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
.......................................................................................
& : Mitglied der gleichen Patentfamilie, übereinstimmendes
    Dokument